# EUROPÄISCHE PATENTANMELDUNG

(11) **EP 2 575 338 A1**
(43) Veröffentlichungstag der Anmeldung: **03.04.2013**
(21) Anmeldenummer: 12075111.0
(22) Anmeldetag: 25.09.2012
(51) Int. Cl.: H04M 3/42, H04W 4/00

(54) **Verfahren zur Festnetzerreichbarkeit und dafür geeignetes Mobilfunkendgerät**

(30) Priorität: 27.09.2011 DE 102011053994
(71) Anmelder: Deutsche Telekom AG, 53113 Bonn (DE)
(72) Erfinder: Aghajani-Talesh, Babak, DE-53113 Bonn (DE); Hadj-Ali, Karim, DE-50968 Köln (DE); Allaki, Younes, DE-50667 Köln (DE)
(74) Vertreter: Drosch, Ulrich

(57) **Zusammenfassung**

Die Erfindung betrifft ein Verfahren, welches es einem anrufenden Teilnehmer (1) ermöglicht, mittels eines beliebigen Telefonendgerätes unter Anwahl einer Festnetzrufnummer ein Telefongespräch mit einem, für das Telefongespräch ein Mobilfunkendgerät (3) verwendenden, angerufenen Teilnehmer (2) zu führen, sofern die Mobilfunknummer des Teilnehmers (2) zuvor auf einer Voice-over-IP-Plattform (4) in Zuordnung zu der angerufenen Festnetzrufnummer registriert wurde. Dazu wird bei einem Anruf unter der Festnetzrufnummer über die Voice-over-IP-Plattform (4) und eine Datenverbindung (5) eine Verbindungsanforderung zum Aufbau einer Gesprächsverbindung an das Mobilfunkendgerät (3) übermittelt, bei deren Annahme von dem Mobilfunkendgerät (3) automatisiert eine Mobilfunkgesprächsverbindung (6) zu der Voice-over-IP-Plattform (4) aufgebaut und diese hier unter Nutzung einer Call Takeover Funktion mit der im Zuge der Anrufsignalisierung zwischen dem anrufenden Teilnehmer (1) und dem angerufenen Teilnehmer (2) bereits aufgebauten Verbindung zusammengeschaltet. Danach wird eine unter der Festnetzrufnummer des angerufenen Teilnehmers (2) zwischen der Voice-over-IP-Plattform (4) und dessen Mobilfunkendgerät (3) zur Übermittlung der Verbindungsanforderung und zur Signalisierung der Anrufannahme aufgebaute Datenübertragungssitzung (Session) wieder abgebaut.

## Beschreibung

Die Erfindung bezieht sich auf eine Lösung zum Aufbau einer Telefongesprächsverbindung, die es einem Nutzer ermöglicht, auf einem Mobilfunkendgerät für ein Telefongespräch über eine so genannte geografische Rufnummer, das heißt eine Rufnummer im Telefonfestnetz, erreichbar zu sein. Sie bezieht sich auf ein Verfahren, welches mit Hilfe einer auf dem Mobilfunkgerät des angerufenen Teilnehmers ablaufenden software-basierten Anwendung realisiert wird und auf ein entsprechend ausgebildetes Mobilfunkendgerät.

Eine im Grunde ständige telefonische Erreichbarkeit ist heute vielfach gewünscht oder aber auch im Zusammenhang mit der beruflichen Tätigkeit von Personen häufig erforderlich. Dies trifft auch für den Fall zu, dass sich eine anzurufende Person nicht an einem festen Standort aufhält, sondern unterwegs ist und/oder ihren Standort häufig wechselt. Dem insoweit bestehenden Bedarf ist durch die Entwicklung der Mobilfunktelefonie grundsätzlich bereits entsprochen worden.

Allerdings ist festzustellen, dass es von Anrufern aus unterschiedlichen Gründen, wie zum Beispiel aus Kostengründen, häufig bevorzugt wird, den anzurufenden Gesprächspartner unter einer Festnetztelefonnummer zu kontaktieren. Dies gilt insbesondere in dem Fall, dass sich die anrufende Person selbst eines Festnetztelefons bedient, da Gespräche aus dem Festnetz in ein Mobilfunknetz im Allgemeinen deutlich teurer sind als Gespräche innerhalb des Festnetzes. Aufgrund der Vielzahl von Mobilfunknetzen beziehungsweise Mobilfunkprovidern und der sehr unterschiedlichen Tarife ergeben sich aber selbst für einen Anrufer, welcher ein Mobilfunkendgerät zum Anruf eines anderen Mobilfunkteilnehmers benutzt, teilweise erhöhte beziehungsweise von ihm bei der Einleitung des Anrufs nicht absehbare Kosten. Dies gilt insbesondere, sofern der angerufene Teilnehmer Kunde eines anderen Mobilfunkproviders ist.

Aus den vorgenannten Gründen wurden in der Vergangenheit bereits Lösungen entwickelt, welche es dem Anrufer ermöglichen, einen gewünschten Gesprächspartner auch dann unter einer Festnetznummer anzurufen, wenn es diesem gerade nicht möglich ist, den Anruf mittels eines Festnetztelefons anzunehmen. Da der Anrufer die ihm bei Anruf der betreffenden Festnetznummer entstehenden Kosten kennt, ist dabei für ihn eine volle Kostentransparenz gegeben.

Eine entsprechende, von der anzurufenden Person je nach Bedarf und jederzeit selbst aktivierbare und deaktivierbare Möglichkeit besteht in der Nutzung der Anrufweiterleitung von an einem Festnetzanschluss eingehenden Anrufen. Der Nachteil dieser Möglichkeit besteht darin, dass für den Festnetzbetreiber im Falle der Weiterleitung eines Anrufs aus dem Festnetz in ein Mobilfunknetz Terminierungskosten entstehen, so dass der entsprechende Service den Endkunden nicht kostenlos zur Verfügung gestellt werden kann. Daher müssen die für die Weiterleitung entstehenden Kosten jeweils durch den angerufenen Teilnehmer getragen werden.

Eine andere Möglichkeit wird durch einige Mobilfunknetzbetreiber angeboten. Diese ermöglichen es ihren Kunden, unter einer Festnetznummer erreichbar zu sein, wobei unter der betreffenden Rufnummer eingehende Anrufe durch den Mobilfunknetzbetreiber auf das Mobilfunkendgerät des angerufenen Kunden geroutet werden. Jedoch steht diese Möglichkeit nur Mobilfunkanbietern zur Verfügung, welche ein eigenes Mobilfunknetz betreiben. So genannte Reseller, welche nicht über ein eigenes Mobilfunknetz verfügen, können ihren Kunden einen derartigen Service nicht anbieten.

Eine weitere Alternative besteht in der Nutzung des Voice-over-IP. Hierbei wird einem Kunden, welcher über einen Voice-over-IP-Account verfügt, eine Festnetznummer zugeordnet. Die unter der betreffenden Rufnummer eingehenden Telefonate werden über das Internet und mindestens ein Gateway auf das Mobilfunkendgerät des angerufenen Teilnehmers weitergeleitet, dessen Mobilfunknummer in Zuordnung zu der angerufenen Festnetznummer auf einem Voice-over-IP-Plattform gespeichert ist. Eine diesem Prinzip folgende Lösung ist beispielsweise aus der US 2010/0226362 A1 bekannt. Die genannte Druckschrift beschreibt ein Verfahren, durch welches Kosten für Auslandstelefonate reduziert werden sollen. Gemäß dem Verfahren wird einem Teilnehmer im Ausland eine Festnetznummer im Inland zugeteilt. Ein unter der letztgenannten Rufnummer des Inlandnetzes eingehender Anruf wird auf eine IP-Adresse umgesetzt und in das Ausland oder zu einem anderen Kontinent mittels Voice-over-IP über das Internet geführt. Im Zielland wird der Anruf dann in Abhängigkeit von der Art des angerufenen Zielgeräts als Voice-over-IP-Anruf weitergeführt oder über ein Gateway einem Endgerät in einem lokalen Festnetz oder Mobilfunknetz zugeleitet. Allerdings ist das bei der Verwendung von Voice-over-IP für eine Gesprächsverbindung benötigte Datenvolumen beträchtlich. Es fallen hierbei ca. 100 kBit Daten pro Sekunde an. Dies verursacht jedoch bei den Netzbetreibern und/oder Kunden unter Umständen (insbesondere bei abweichend von der vorgenannten Druckschrift nur im Inland geführten Telefonaten) höhere Kosten als eine beispielsweise über das GSM-Netz abgehende Mobilfunkverbindung. Darüber hinaus kann die mögliche Datenübertragungsrate je nach Belegung der Funkzelle, in welcher sich der angerufene Teilnehmer mit seinem Mobilfunkendgerät gerade befindet, erheblich schwanken, worunter letztlich die Gesprächsqualität leidet.

Darüber hinaus ist aus der DE 10 2006 050 328 A1 eine Lösung für eine Rufweiterleitung für eine unter Nutzung von Voice-over-IP eingeleitete Gesprächsverbindung bekannt. Die Lösung geht davon aus, dass zwei Teilnehmer standardmäßig über eine Voice-over-IP-Verbindung miteinander kommunizieren, wobei die Erreichbarkeit eines angerufenen Teilnehmers auch dann gewährleistet sein soll, wenn eine Voice-over-IP-Verbindung zu dessen IP-Adresse gerade beziehungsweise vorübergehend nicht hergestellt werden kann. Gemäß der dazu vorgeschlagenen Lösung wird an ein internetfähiges Mobiltelefon eines anrufenden Teilnehmers, welcher eine Voice-over-IP-Verbindung zu einem anderen Teilnehmer aufbauen möchte, als Response auf eine entsprechende, von dem Endgerät des anrufenden Teilnehmers ausgesendete Invite-Nachricht eine Mobilfunknummer als alternative Erreichbarkeitsinformation für den angerufenen Teilnehmer übermittelt. Das mobile Endgerät des anrufenden Teilnehmers extrahiert die Mobilfunknummer des angerufenen Teilnehmers aus der bei ihm als Response auf die Invite-Nachricht eingehende Nachricht und baut dann selbsttätig eine Mobilfunkverbindung zu dieser Mobilfunknummer auf. Hierbei ist es wiederum als nachteilig anzusehen, dass der Anrufer, welcher ursprünglich eine kostengünstige Voice-over-IP-Verbindung zu dem angerufenen Teilnehmer nutzen wollte, mit den Kosten der stattdessen aufgebauten Mobilfunkverbindung belastet ist. Zwar ist es gemäß einer Ausbildungsform der beschriebenen Lösung vorgesehen, dass der anrufende Teilnehmer über den beabsichtigten Aufbau einer Mobilfunkverbindung als Alternative zu der gewünschten Voice-over-IP-Verbindung unterrichtet wird und dies ablehnen kann. Jedoch muss er den Aufbau der Mobilfunkverbindung und die damit entstehenden Kosten in Kauf nehmen, sofern er den angerufenen Teilnehmer unbedingt sprechen muss beziehungsweise möchte.

Aufgabe der Erfindung ist es, eine alternative Möglichkeit für die zentrale Erreichbarkeit eines Mobilfunkkunden unter einer geographischen Rufnummer, nämlich unter einer Telefonfestnetznummer zur Verfügung zu stellen, welche die vorgenannten Nachteile vermeidet. Hierzu sind ein Verfahren und ein zur Durchführung des Verfahrens geeignetes Mobilfunkendgerät anzugeben, welche den Aufbau einer Gesprächsverbindung mit dem betreffenden Mobilfunkendgerät, beispielsweise einem Smartphone, durch Anwahl einer Festnetznummer mit hoher Qualität der Verbindung mit gleichzeitig geringen Kosten ermöglichen.

Die Aufgabe wird durch ein Verfahren mit den Merkmalen des Patentanspruchs 1 gelöst. Das die Aufgabe lösende Mobilfunkendgerät ist durch den ersten Sachanspruch charakterisiert. Vorteilhafte Aus- beziehungsweise Weiterbildungen der Erfindung sind durch die Unteransprüche gegeben.

Nach dem vorgeschlagenen Verfahren zur Festnetzerreichbarkeit eines Mobilfunkendgerätes wird es, der Aufgabe entsprechend, einem anrufenden Teilnehmer ermöglicht, mittels eines beliebigen Telefonendgerätes ein Telefongespräch mit einem zweiten, hierfür ein Mobilfunkendgerät verwendenden angerufenen Teilnehmer zu führen, indem er eine Festnetzrufnummer des angerufenen Teilnehmers anwählt. Bei dieser Festnetznummer des angerufenen Teilnehmers handelt es sich um eine Rufnummer, die zuvor auf einer Voice-over-IP-Plattform in Zuordnung zu der Mobilfunknummer des von dem angerufenen Teilnehmer zur Durchführung des Verfahrens verwendeten Mobilfunkendgeräts registriert wurde.

Sofern das betreffende Mobilfunkendgerät - beispielsweise ein Smartphone oder ein Tablet PC- des angerufenen Teilnehmers bei der Voice-over-IP-Plattform angemeldet ist, wird im Falle eines unter der korrespondierenden Festnetznummer eingehenden Anrufs durch die Voice-over-IP-Plattform über eine Datenverbindung im Rahmen der Initiierung des Aufbaus einer Datenübertragungssitzung (Session) eine Verbindungsanforderung an das Mobilfunkendgerät übertragen. Die vorgenannte Voraussetzung, wonach betreffende Mobilfunkendgerät bei der Voice-over-IP-Plattform angemeldet sein muss unterscheidet sich von derjenigen, wonach dieses Mobilfunkendgerät beziehungsweise dessen Mobilfunknummer zuvor bei der Voice-over-IP-Plattform in Zuordnung zu der anzurufenden geographischen Rufnummer zu registrieren ist. Demgemäß wird durch die Anmeldung des zuvor registrierten Mobilfunkendgerät lediglich sichergestellt, dass die Voice-over-IP-Plattform darüber informiert ist, dass das zur Durchführung des Verfahrens geeignete Mobilfunkendgerät eingeschaltet und durch die Voice-over-IP-Plattform erreichbar ist.

Die von der Voice-over-IP-Plattform an das Mobilfunkendgerät des angerufenen Teilnehmers übermittelte Verbindungsanforderung wird durch eine auf dem Mobilfunkendgerät ablaufende softwarebasierte Anwendung, mittels welcher vorzugsweise zuvor auch die Anmeldung bei der Voice-over-IP-Plattform erfolgt ist, an dem Mobilfunkendgerät signalisiert. Bei der zuvor genannten softwarebasierten Anwendung handelt es sich vorzugsweise um eine so genannte, heutzutage in Verbindung mit Smartphones und Tablet PCs gebräuchliche App, aber jedenfalls um eine Anwendung, welche über eine entsprechende, auf dem Mobilfunkendgerät gehaltene Funktionsbibliothek - eine so genannte API - Zugriff auf die Telefonfunktionalität des betreffenden Mobilfunkendgeräts hat.

Bei einer ebenfalls durch die vorgenannte App (beispielsweise mittels einer virtuellen Taste) ermöglichten Annahme des auf dem Mobilfunkendgerät signalisierten Anrufs wird durch diese Anwendung erfindungsgemäß zunächst über die bestehende, zur Übermittlung der Verbindungsanforderung genutzte Datenverbindung gegenüber der Voice-over-IP-Plattform die Anrufannahme signalisiert. Danach wird durch die betreffende Anwendung beziehungsweise App unter Nutzung einer dedizierten Rufnummer selbsttätig eine weitere Verbindung, nämlich eine Mobilfunkgesprächsverbindung, von dem Mobilfunkendgerät des angerufenen Teilnehmers zu der Voice-over-IP-Plattform aufgebaut. Bei der vorgenannten dedizierten Rufnummer handelt es sich um eine Voice-over-IP-Service-Rufnummer des Betreibers der Voice-over-IP-Plattform unter welcher sich aufgrund erfolgter Registrierung ihrer Rufnummer autorisierte Telefonendgeräte aus beliebigen externen Netzen bei der Voice-over-IP-Plattform einwählen können.

Das Verfahren ist nun weiterhin so gestaltet, dass diese zusätzlich aufgebaute, von dem Mobilfunkendgerät des angerufenen Teilnehmers ausgehende Mobilfunkgesprächsverbindung (beispielsweise GSM-Verbindung) auf der Voice-over-IP-Plattform unter Nutzung einer als solches grundsätzlich bekannten Call Takeover Funktion zu einer Konferenz mit der im Zuge der Übermittlung der Verbindungsanforderung beziehungsweise der Anrufsignalisierung zwischen dem anrufenden Teilnehmer und dem angerufenen Teilnehmer bereits aufgebauten Verbindung zusammengeschaltet wird. Gleichzeitig wird dabei die unter der Festnetzrufnummer des angerufenen Teilnehmers zwischen dessen Mobilfunkendgerät und der Voice-over-IP-Plattform über die bestehende Datenverbindung zur Anrufsignalisierung und zur Signalisierung der Rufannahme aufgebaute Datenübertragungssitzung wieder abgebaut, das heißt beendet. Das sich anschließende eigentliche Telefongespräch wird dann über die durch das Mobilfunkendgerät des ursprünglich angerufenen Teilnehmers aufgebaute Mobilfunkgesprächsverbindung geführt. Die hierfür entstehenden Kosten werden daher dem angerufenen Teilnehmer berechnet, der aber vorzugsweise über eine Flatrate verfügt, welche mittels seines Mobilfunkendgeräts, über die auf der Voice-over-IP-Plattform angewählte dedizierte Rufnummer geführte Gespräche einschließt.

Die Erfindung geht demnach von der Überlegung aus, nur für die Übertragung der Verbindungsanforderung zum Zwecke der Signalisierung des Anrufs und der Bestätigung seiner Annahme eine Datenverbindung zu verwenden, aber das eigentliche Telefongespräch, für welches, wie bereits ausgeführt, im Allgemeinen etwa 100 kBit pro Sekunde an Daten anfallen, nicht über diese Datenverbindung, sondern über eine kostengünstigere, durch das Mobilfunkendgerät des angerufenen Teilnehmers selbsttätig aufgebaute reguläre Mobilfunkgesprächsverbindung abzuwickeln.

Neben Kostenvorteilen hat dies den Vorteil, dass auch Mobilfunkanbieter, welche nicht über eine eigene Netzinfrastruktur verfügen - so genannte Reseller - ihren Kunden das erfindungsgemäße Verfahren und die mittels diesem bereitgestellte Festnetzerreichbarkeit anbieten können.

Vorzugsweise wird die Session zur Übermittlung der Verbindungsanforderung und zur Signalisierung der Anrufannahme unter Nutzung der Datenverbindung zwischen der Voice-over-IP-Plattform und dem Mobilfunkendgerät des angerufenen Teilnehmers unter Verwendung des SIP-Netzwerkprotokolls (Session Initiation Protokoll) aufgebaut. Denkbar ist aber selbstverständlich auch die Verwendung anderer Protokolle, jedenfalls dann, wenn ein entsprechendes Protokoll, ebenso wie das SIP, den Signalisierungsverkehr mit Metadaten zur Steuerung des Anrufaufbaus und der Kommunikation von den unter Nutzung anderer Protokolle zu übertragenen Gesprächsdaten trennt. Der Vorteil einer Verwendung des SIP besteht in dessen weiter Verbreitung und großen Akzeptanz sowie darin, dass bei seiner Verwendung für die Übertragung der vorgenannten Metadaten nur eine niedrige Bandbreite erforderlich ist. Der Aufbau einer Datenübertragungssitzung beziehungsweise einer Session wird dabei bekanntermaßen durch lediglich eine kurze, eine Zeile Text umfassende Nachricht (so genannte Invite-Nachricht) angestoßen.

Das zuvor beschriebene Verfahren kann vorteilhafterweise noch dadurch weitergebildet sein, dass im Falle dessen, dass das Mobilfunkendgerät des angerufenen Teilnehmers gerade bei der Voice-over-IP-Plattform nicht angemeldet ist oder zwischen diesem Mobilfunkendgerät und einem anderen beziehungsweise dritten Endgerät bereits eine Gesprächsverbindung besteht, an das Telefonendgerät des anrufenden Teilnehmers eine diesen entsprechend informierende Nachricht übermittelt wird. Der anrufende Teilnehmer wird demgemäß durch die Voice-over-IP-Plattform, bei welcher die Festnetznummer des angerufenen Teilnehmers registriert ist, darüber unterrichtet, dass Letzterer augenblicklich nicht erreichbar ist. Dies kann dadurch bewerkstelligt werden, dass die entsprechende Nachricht an das Telefonendgerät des anrufenden Teilnehmers ausgegeben wird, sofern nach der Übermittlung der Verbindungsanforderung für die aufzubauende Gesprächsverbindung an das Mobilfunkendgerät des anrufenden Teilnehmers innerhalb einer festgelegten Zeitspanne keine Anrufannahme bei der Voice-over-IP-Plattform signalisiert wird.

Ein die Aufgabe lösendes und zur Durchführung des erfindungsgemäßen Verfahrens geeignetes Mobilfunkendgerät ist mit einer von seiner Zentralverarbeitungseinheit verarbeitbaren App, nämlich einer softwarebasierten Anwendung mit einem über eine API, das heißt eine auf dem Mobilfunkendgerät gehaltene Funktionsbibliothek, gegebenen Zugriff auf die Telefonfunktionalität des Mobilfunkendgeräts ausgestattet. Durch diese Anwendung beziehungsweise App wird, wenn sie gestartet und in den Arbeitsspeicher des Mobilfunkendgeräts geladen ist, ein über eine Datenverbindung von einer im Zusammenhang mit der App auf dem Mobilfunkendgerät hinterlegten Adresse (beziehungsweise Voice-over-IP-Rufnummer) einer Voice-over-IP-Plattform eingehender Anruf an dem Mobilfunkendgerät signalisiert. Darüber hinaus wird erfindungsgemäß von dem entsprechend ausgestatteten Mobilfunkendgerät, das heißt von der auf ihm ablaufenden Anwendung, im Falle einer Annahme des über die vorgenannte Voice-over-IP-Plattform eingehenden Anrufs dessen Annahme an die betreffende Voice-over-IP-Plattform signalisiert und danach zu dieser, unter Nutzung der schon angesprochenen dedizierten Einwahlnummer, selbsttätig eine von dem Mobilfunkendgerät ausgehende Mobilfunkgesprächsverbindung aufgebaut. Die Annahme eines entsprechenden Anrufs, der vorzugsweise durch die genannte App in einer gegenüber sonstigen Anrufen abweichenden Weise signalisiert wird, erfolgt dabei nicht mit der üblicherweise zur Annahme von Anrufen verwendeten Taste des Mobilfunkendgeräts, sondern mit einer anderen, durch die App mit der Funktion für den Aufbau der Mobilfunkgesprächsverbindung zu der Voice-over-IP-Plattform belegten realen oder virtuellen Taste.

Ein Ausführungsbeispiel der Erfindung soll nachfolgend anhand von Zeichnungen erläutert werden. Die Zeichnungen zeigen im Einzelnen:
- Fig. 1:: den Ablauf bis zur Signalisierung eines Anrufs des anrufenden Teilnehmers,
- Fig. 2:: den Ablauf des sich bei Annahme des Anrufs daran anschließenden Aufbaus der Mobilfunkgesprächsverbindung.

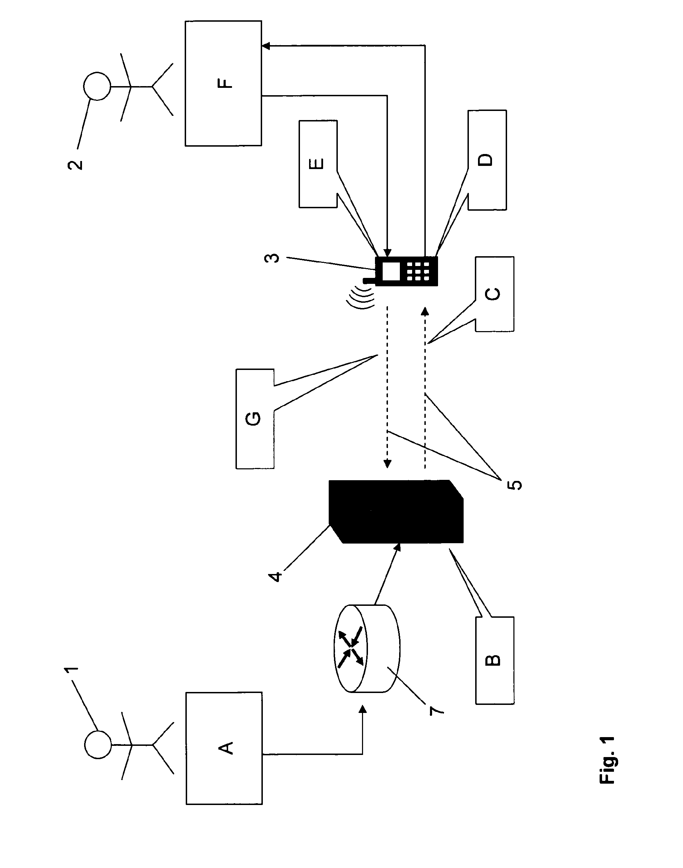

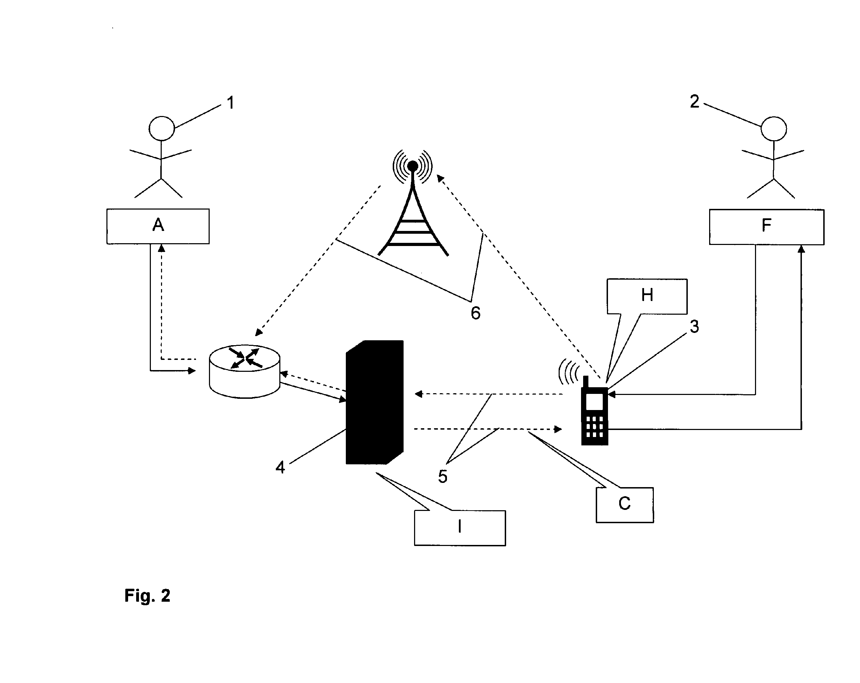

Durch die Fig. 1 ist der sich bei einem Anruf des ersten Teilnehmers (anrufender Teilnehmer) bei dem zweiten Teilnehmer (angerufener Teilnehmer) bis zur Signalisierung dieses Anrufs vollziehende Ablauf schematisch dargestellt. Dieser gestaltet sich demnach wie folgt:
(A) Der anrufende Teilnehmer 1 wählt mit einem beliebigen Telefonendgerät eine ihm von dem anzurufenden beziehungsweise angerufenen Teilnehmer 2 mitgeteilte Festnetznummer an. Bei dieser Festnetznummer handelt es sich um eine auf einer Voice-over-IP-Plattform 4 registrierte Rufnummer. Hier wurde diese Rufnummer von dem angerufenen Teilnehmer 2 zuvor unter Zuordnung zu der Mobilfunknummer des von dem angerufenen Teilnehmer 2 im Rahmen des Verfahrens zur Festnetzerreichbarkeit verwendeten Mobilfunkendgeräts 3 registriert. Bei dem zum Anruf verwendeten Telefonendgerät des anrufenden Teilnehmers 1 kann es sich um ein beliebiges zur Telefonie geeignetes Endgerät, wie ein Mobilfunkendgerät, beispielsweise ein Handy, ein Festnetztelefon oder aber auch um ein Voice-over-IP-Telefon handeln. Unabhängig davon fallen für den anrufenden Teilnehmer 1, trotzdem er den angerufenen Teilnehmer 2 letztlich auf dessen Mobilfunkendgerät kontaktiert, lediglich die für die Anwahl einer Festnetzrufnummer üblichen Kosten an, wobei der Anruf gegebenenfalls beispielsweise aus dem Festnetz bei Bestehen einer Flatrate auch völlig unentgeltlich für ihn sein kann. Aber selbst, wenn der anrufende Teilnehmer 1 nicht über eine Flatrate verfügt, sind die für ihn entstehenden Kosten insoweit gering, als dass für ihn keinerlei Gesprächskosten, sondern allenfalls Kosten für die Anwahl der auf der Voice-over-IP-Plattform 4 registrierten Festnetzrufnummer anfallen.
(B) Sein Anruf wird zu der Voice-over-IP-Plattform 4 geroutet, wobei dies jedenfalls dann, wenn dieser Anruf nicht selbst mittels eines Voice-over-IP-Telefons getätigt wird, über ein Gateway 7 erfolgt.
(C) Durch die Voice-over-IP-Plattform 4 wird die für den angerufenen Teilnehmer 2 in Zuordnung zu seiner Festnetzrufnummer registrierte Mobilfunknummer ermittelt. Unter Verwendung dieser Nummer wird über eine zu dem Mobilfunkendgerät 3 des angerufenen Teilnehmers 2 bestehende Datenverbindung 5 unter Nutzung des SIP eine Datenübertragungssitzung beziehungsweise Session aufgebaut und an das Mobilfunkendgerät 3 eine Verbindungsanforderung (Invite-Nachricht) übermittelt.
(D) Auf dem Mobilfunkendgerät 3 des angerufenen Teilnehmers 2 läuft eine App, ein so genannter FMC-Client (Fixed Mobil Convergence), wobei zwischen dem Mobilfunkendgerät 3 und der Voice-over-IP-Plattform 4 eine (mobile) Datenverbindung (5) zur Übermittlung von Daten über beispielsweise GPRS, oder UMTS besteht. Der FMC-Client ist dabei so gestaltet, dass er abweichend von herkömmlichen SIP-Clients keine Übertragung von Gesprächsdaten über die Datenverbindung 5 ermöglicht.
(E) Die von der Voice-over-IP-Plattform 4 übertragene Verbindungsanforderung wird dem angerufenen Teilnehmer 2 durch die auf seinem bei der Voice-over-IP-Plattform 4 angemeldeten Mobilfunkendgerät 3 ablaufende App signalisiert.
(F) Der angerufene Teilnehmer 2 erkennt den sich hinsichtlich der Signalisierung von anderen Anrufen unterscheidenden, über die Voice-over-IP-Plattform 4 eingehenden Anruf. Mittels einer durch die auf dem Mobilfunkendgerät 3 ablaufende Anwendung mit einer entsprechenden Funktion unterlegten physischen oder virtuellen Taste kann er den Anruf annehmen.
(G) Sofern der angerufene Teilnehmer 2 den eingehenden Anruf annimmt, wird dies der Voice-over-IP-Plattform 4 durch die App im Rahmen der über die Datenverbindung 5 zur Übermittlung der Invite-Nachricht aufgebauten Session signalisiert (200 OK-Nachricht). Danach schließt sich der in der Fig. 2 schematisch dargestellte Ablauf an.
   Dieser gestaltet sich dann wie folgt:
(H) Von der auf dem Mobilfunkendgerät 3 des angerufenen Teilnehmers 2 ablaufenden App wird eine Mobilfunkgesprächsverbindung 6, beispielsweise eine GSM-Verbindung, zu der die Verbindungsanforderung übermittelnden Voice-over-IP-Plattform 4 aufgebaut.
(I) Die Mobilfunkgesprächsverbindung 6 wird von der Voice-over-IP-Plattform 4 in einer Konferenz mit der bereits im Zuge der Anrufsignalisierung zwischen dem anrufenden Teilnehmer 1 und dem angerufenen Teilnehmer 2 bestehenden Verbindung mittels der Call Takeover Funktion zusammengeschaltet. Gleichzeitig wird die unter der Festnetzrufnummer des angerufenen Teilnehmers 2 über die zwischen dessen Mobilfunkendgerät 3 und der Voice-over-IP-Plattform 4 bestehende Datenverbindung 5 aufgebaute Datenübertragungssitzung wieder abgebaut beziehungsweise beendet. Das sich nach der Annahme des Anrufs anschließende Telefongespräch wird zwischen den Teilnehmern 1, 2 aufgrund des zuvor dargestellten Zusammenschaltens der Verbindungen als reguläres Telefonat über ein Mobilfunknetz, beispielsweise das GSM-Netz, geführt. Da die Mobilfunkgesprächsverbindung 6 durch das Mobilfunkendgerät 3 des angerufenen Teilnehmers 2 aufgebaut wurde, trägt dieser die Kosten des Telefonats, wobei diese vorzugsweise in den (gegebenenfalls monatlichen) Kosten für den mit dem Betreiber der Voice-over-IP-Plattform 4 geschlossenen Vertrag enthalten sind.

## Patentansprüche

1. Verfahren zur Festnetzerreichbarkeit eines Mobilfunkendgerätes (3), welches es einem anrufenden Teilnehmer (1) ermöglicht, mittels eines beliebigen Telefonendgerätes unter Anwahl einer Festnetzrufnummer ein Telefongespräch mit einem, für das Telefongespräch ein Mobilfunkendgerät (3) verwendenden, angerufenen Teilnehmer (2) zu führen, dessen Mobilfunknummer zuvor auf einer Voice-over-IP-Plattform (4) in Zuordnung zu der angerufenen Festnetzrufnummer registriert wurde, **dadurch gekennzeichnet, dass** bei einem Anruf unter der Festnetzrufnummer über die Voice-over-IP-Plattform (4) und eine Datenverbindung (5) eine Verbindungsanforderung zum Aufbau einer Gesprächsverbindung an das bei der Voice-over-IP-Plattform (4) angemeldete, die Verbindungsanforderung signalisierende Mobilfunkendgerät (3) des angerufenen Teilnehmers (2) übermittelt wird, bei deren der Voice-over-IP-Plattform (4) über die Datenverbindung (5) signalisierten Annahme das sich anschließende Telefongespräch über eine Mobilfunkgesprächsverbindung (6) geführt wird, welche automatisiert durch eine auf dem Mobilfunkendgerät (3) ablaufende software-basierte Anwendung zu der Voice-over-IP-Plattform (4) aufgebaut und dort mit der im Zuge der Anrufsignalisierung zwischen dem anrufenden Teilnehmer (1) und dem angerufenen Teilnehmer (2) bereits aufgebauten Verbindung zusammengeschaltet wird, wobei eine unter der Festnetzrufnummer des angerufenen Teilnehmers (2) zwischen der Voice-over-IP-Plattform (4) und dessen Mobilfunkendgerät (3) über die Datenverbindung (5) zur Übermittlung der Verbindungsanforderung und zur Signalisierung der Anrufannahme aufgebaute Datenübertragungssitzung wieder abgebaut wird.

2. Verfahren nach Anspruch 1, **dadurch gekennzeichnet, dass** die Datenübertragungssitzung zur Übermittlung der Verbindungsanforderung und zur Signalisierung der Anrufannahme unter Nutzung des SIP aufgebaut wird.

3. Verfahren nach Anspruch 1 oder 2, **dadurch gekennzeichnet, dass** im Falle dessen, dass das Mobilfunkendgerät (3) des angerufenen Teilnehmers (2) bei der Voice-over-IP-Plattform (4) nicht angemeldet ist oder zwischen dem Mobilfunkendgerät (3) und einem anderen Endgerät bereits eine Gesprächsverbindung besteht, an das Telefonendgerät des anrufenden Teilnehmers (1) von der Voice-over-IP-Plattform (4) eine Nachricht übermittelt wird, mit welcher der anrufende Teilnehmer (1) darüber informiert wird, dass der angerufene Teilnehmer (2) augenblicklich nicht erreichbar ist.

4. Mobilfunkendgerät (3) mit einer von einer Zentralverarbeitungseinheit des Mobilfunkendgeräts verarbeitbaren App, nämlich einer software-basierten Anwendung mit einem über eine API, das heißt eine auf dem Mobilfunkendgerät (3) gehaltene Funktionsbibliothek gegebenen Zugriff auf die Telefonfunktionalität des Mobilfunkendgeräts (3), durch welche, wenn sie gestartet und in den Arbeitsspeicher des Mobilfunkendgeräts (3) geladen ist, ein in Form einer Verbindungsanforderung von einer im Zusammenhang mit der App auf dem Mobilfunkendgerät (3) hinterlegten Adresse einer Voice-over-IP-Plattform (4) eingehender Anruf an dem Mobilfunkendgerät (3) signalisiert wird, **dadurch gekennzeichnet, dass** die App eine Annahme des vorgenannten Anrufs gegenüber der Voice-over-IP-Plattform (4) signalisiert und zu dieser unter Verwendung einer dedizierten Einwahlrufnummer selbsttätig eine von dem Mobilfunkendgerät (3) ausgehende Mobilfunkgesprächsverbindung (6) aufbaut.
